# EUROPÄISCHE PATENTANMELDUNG

(11) **EP 2 960 616 A1**
(43) Veröffentlichungstag der Anmeldung: **30.12.2015**
(21) Anmeldenummer: 15001032.0
(22) Anmeldetag: 10.04.2015
(51) Int. Cl.: F42B 4/28, B64D 17/34, F42B 10/56

(54) **PYROTECHNISCHE VORRICHTUNG**

(30) Priorität: 25.06.2014 DE 102014009168; 18.11.2014 DE 102014016951
(71) Anmelder: Drew Defense GmbH, 27574 Bremerhaven (DE)
(72) Erfinder: Runck, Andreas, 27572 Bremerhaven (DE)
(74) Vertreter: Möller, Friedrich

(57) **Zusammenfassung**

Fallschirme für beispielsweise Signalraketen öffnen sehr schlagartig, wodurch die Fangleinen (13) einer starken Belastung ausgesetzt sind. Die Erfindung sieht es vor, zwei Fangleinen (14) dehnbar, insbesondere gummibandartig, auszubilden, wodurch die anfänglich wirksame Fallschirmfläche reduziert wird. Dadurch öffnet sich die Fallschirmkappe (12) des Fallschirms (10) langsamer als bei bisherigen Fallschirmen (10). Das reduziert den Öffnungsstoß des Fallschirms (10). Hierdurch werden insbesondere die Fangleinen (13, 14), aber auch die Fallschirmkappe (12) des Fallschirms (10) weniger belastet.

## Beschreibung

Die Erfindung betrifft eine pyrotechnische Vorrichtung gemäß dem Oberbegriff des Anspruchs 1.

Bei den hier angesprochenen pyrotechnischen Vorrichtungen geht es um aus der Hand abgefeuerte Fallschirmraketen sowie verschossene Fallschirmpatronen bzw. Fallschirmmunition mit Signalmitteln, Leuchtmitteln und/oder Beobachtungsmitteln. Bei den Beobachtungsmitteln kann es sich um Kameras, Sensoren oder auch Messsonden handeln. Von den Raketen oder Munitionen werden die Signal-, Leucht- bzw. Beobachtungsmittel zusammen mit jeweils einem diesem zugeordneten Fallschirm hochgeschossen oder auf einer ballistischen Bahn verschossen. Danach sinken die Signal-, Leucht- und/oder Beobachtungsmittel am Fallschirm hängend langsam zur Erde.

Bei bekannten pyrotechnischen Vorrichtungen dieser Art sind die Signal-, Leucht- und/ oder Beobachtungsmittel direkt mit den Fallschirmleinen des Fallschirms verbunden, wobei die Fallschirmleinen aus nicht oder nicht nennenswert dehnbaren Seilen oder sonstigen Strängen gebildet sind. Infolge der nicht oder nur gering dehnbaren Fallschirmleinen kommt es zu einem raschen und sofort vollständig wirksamen Entfalten des Fallschirms, was zu einem stoßartigen Abbremsen des Signal-, Leucht- und/oder Beobachtungsmittel führt. Dementsprechend hoch sind die Belastungen der Fallschirmleinen, aber auch der Fallschirmkappe. Es kann dadurch zum Versagen des Fallschirms kommen, wodurch das Signal-, Leucht- und/oder Beobachtungsmittel ungebremst und somit sehr rasch zu Boden fällt. Die Signal- und Leuchtdauer, aber auch Beobachtungsdauer ist dann nur sehr kurz. Empfindliche Beobachtungsmittel, wie zum Beispiel Kameras oder Sensoren, können außerdem beschädigt werden, wenn der Öffnungsstoß beim Entfalten des Fallschirms zu groß wird oder sie beim Versagen des Fallschirms ungebremst zu Boden fallen. Um die geschilderten Gefahren zuverlässig zu vermeiden, müssen die Fallschirmleinen entsprechend dick dimensioniert sein, was das Gewicht des Fallschirms zu Lasten seiner Nutzlast, nämlich des Signal-, Leucht- und/oder Beobachtungsmittels, verringert. Das erfordert einen entsprechend großen Aufnahmeraum in der pyrotechnischen Vorrichtung.

Ausgehend vom Vorstehenden liegt der Erfindung die Aufgabe zugrunde, eine pyrotechnische Vorrichtung der eingangs genannten Art dahingehend weiterzuentwickeln, dass auf einfache, platzsparende und kostengünstige Weise die Gefahr der Beeinträchtigung des Fallschirms, insbesondere in der Phase des Öffnens bzw. Entfaltens des Fallschirms, beseitigt wird oder zumindest deutlich reduziert wird.

Eine pyrotechnische Vorrichtung zur Lösung dieser Aufgabe weist die Merkmale des Anspruchs 1 auf. Demnach ist mindestens eine der Fallschirmleinen dehnbar und/oder dehnbarer als die übrigen Fallschirmleinen. Insbesondere ist nur mindestens eine Fallschirmleine dehnbar, während wenigstens eine oder alle übrigen Fallschirmleinen undehnbar oder quasi undehnbar sind. Durch die mindestens eine dehnbare oder dehnbarere Fallschirmleine wird erreicht, dass der Fallschirm nicht sogleich mit voller Bremswirkung abgebremst wird und/oder sich langsamer öffnet. Es kommt die volle Wirksamkeit des Fallschirms, insbesondere seiner Fallschirmkappe, erst langsam, zeitverzögert zum Tragen. Anfänglich wird die wirksame Fallschirmfläche durch die vorzugsweise gummibandartige Verlängerung der mindestens einen dehnbaren Fallschirmleine verringert. Das führt zunächst nur zu einer geringen Verzögerung der Sinkgeschwindigkeit des Fallschirms mit dem daran hängenden Signal-, Leucht- und/oder Beobachtungsmittel. Anschließend zieht sich die mindestens eine dehnbare oder dehnbarere Fallschirmleine infolge abnehmender Fallgeschwindigkeit nach und nach, vorzugsweise kontinuierlich, zusammen, wodurch sich der Fallschirm, insbesondere seine Fallschirmkappe, erst allmählich entfaltet und dadurch das Signal-, Leucht- und/oder Beobachtungsmittel gleichmäßig über einen längeren Zeitraum hinweg langsam zu Boden sinkt. Hierdurch wird die Gefahr des Reißens des Fallschirms, insbesondere der Fallschirmkappe und/oder Fallschirmleinen, ohne nennenswerte konstruktive Änderungen des Fallschirms und ohne zusätzlichen Platz beanspruchende Mittel beseitigt oder zumindest verringert. Der Fallschirm nimmt erst mit zeitlicher Verzögerung seine vorgesehene Ausrichtung, in der die dehnbaren Fallschirmleinen sich mindestens größtenteils wieder elastisch zusammengezogen haben und dadurch alle Fallschirmleinen etwa gleich lang oder die nicht dehnbaren Fallschirmleinen etwas länger als die dehnbaren Fallschirmleinen sind, ein. Diese vorgesehene Ausrichtung wird im Folgenden nur kurz als "vollständiger entfalteter Fallschirm" bezeichnet.

Bevorzugt ist es vorgesehen, dass die Dehnbarkeit jeder dehnbaren oder dehnbareren Fallschirmleine um ein Vielfaches größer ist als die Dehnbarkeit mindestens einer, vorzugsweise aller, übrigen Fallschirmleinen. Dadurch wird sichergestellt, dass auch bei - wenn auch nur gering - dehnbaren übrigen Fallschirmleinen die mindestens eine dehnbarere Fallschirmleine sich mehr dehnen kann und dadurch zum allmählichen, zeitverzögerten vollständigen Wirksamwerden bzw. vollständigen Entfalten des Fallschirms, insbesondere der Fallschirmkappe, beiträgt.

Alternativ oder zusätzlich kann es vorgesehen sein, dass jede dehnbare oder dehnbarere Fallschirmleine mindestens um 30% ihrer unbelasteten Gesamtlänge (Ausgangslänge) dehnbar ist. Das heißt, diese mindestens eine Fallschirmleine kann sich mindestens auf das 1,3-fache ihrer Ausgangslänge während des Öffnens des Fallschirms elastisch verlängern. Vorzugsweise ist es vorgesehen, dass jede dehnbare oder dehnbarere Fallschirmleine sich auf mehr als das 1,5-fache ihrer Ausgangslänge dehnen kann.

Gemäß einer vorteilhaften Ausgestaltung der Erfindung kann es vorgesehen sein, dass mindestens eine der übrigen Fallschirmleinen beim Entfalten des Fallschirms nicht oder zumindest kaum dehnbar ist. Dann verändert nur die mindestens eine dehnbare bzw. dehnbarere Fallschirmleine während des Öffnens des Fallschirms ihre Länge, wodurch es zu einer anfänglichen Verringerung der wirksamen Fallschirmfläche kommt, was die Belastung im gesamten Fallschirmsystem durch einen geringeren Öffnungsstoß deutlich reduziert.

Eine vorteilhafte Ausgestaltungsmöglichkeit der Vorrichtung sieht es vor, dass die oder jede dehnbare oder dehnbarere Fallschirmleine mindestens so weit dehnbar ist, dass ihre Ausgangslänge um den Durchmesser, die größte Breite oder die Diagonale einer Grundrissfläche des Fallschirms, insbesondere der Fallschirmkappe, vergrößerbar ist. Dadurch kann sich die mindestens eine dehnbare oder dehnbarere Fallschirmleine anfänglich so weit dehnen, dass die Grundfläche der Fallschirmkappe zunächst etwa in Längsrichtung der Fallschirmleinen bzw. parallel oder leicht schräg zur Flugbahn des Fallschirms verläuft und sich anschließend durch allmähliches elastisches Zurückbilden der Dehnung der dehnbaren Fallschirmleine oder -leinen der Fallschirm bzw. die Fallschirmkappe kontinuierlich umorientiert wird bis zur vollständigen Wirksamkeit des Fallschirms, insbesondere das Erreichen der vollständigen Bremswirkung der Fallschirmkappe, bei der die Grundrissfläche der Fallschirmkappe dann etwa unter einem rechten Winkel quer zur Flugbahn verläuft.

Bei einer bevorzugten Weiterbildung der Vorrichtung ist es vorgesehen, dass mindestens zwei benachbarte Fallschirmleinen oder alternativ zwei gegenüberliegende Fallschirmleinen dehnbar sind und/oder über eine größere Dehnbarkeit als die übrigen Fallschirmleinen verfügen. Hierdurch wird zuverlässig eine anfängliche Orientierung der Fallschirmkappe längs zu den Falischirmleinen bzw. in Flugrichtung herbeigeführt. Es wird praktisch von vorzugsweise zwei nicht dehnbaren oder nur wenig dehnbaren Fallschirmleinen die Fallschirmkappe in Flugrichtung gezogen, während durch die dehnbaren oder dehnbareren Fallschirmleinen und der auftretenden Luftkräfte ein Randbereich der Fallschirmkappe in entgegengesetzter Richtung zur Flugbahn gehalten wird, wodurch sich der Fallschirm nicht sogleich vollständig öffnet, sondern erst nach und nach bei abnehmender Geschwindigkeit.

Bevorzugt ist es vorgesehen, dass die Dehnung aller Fallschirmleinen, insbesondere die Dehnung der stärker dehnbaren Fallschirmleinen, im elastischen Bereich liegt. Dadurch wird sichergestellt, dass die anfängliche Dehnung vor allem der stärker dehnbaren Fallschirmleinen bis zur vollständigen Wirksamkeit und/oder zum vollständigen Öffnen des Fallschirms bzw. Entfalten der Fallschirmkappe allmählich mindestens größtenteils wieder rückgängig gemacht wird.

Besonders vorteilhaft ist es, wenn die Elastizität jeder dehnbaren oder dehnbareren Fallschirmleine gleich groß ist, vorzugsweise die Elastizität der oder jeder dehnbaren oder dehnbareren Fallschirmleine derart ist, dass beim vollständig geöffneten Fallschirm bzw. vollständig entfalteter Fallschirmkappe alle Fallschirmleinen gleich lang oder annähernd gleich lang sind. Dadurch wirken die Fallschirmleinen nach dem allmählichen Erreichen der vollständigen Bremswirkung des Fallschirms wie bei herkömmlichen Fallschirmen mit allesamt nicht dehnbaren oder nur gleichermaßen leicht dehnbaren Fallschirmleinen.

Eine vorteilhafte Ausgestaltungsmöglichkeit der Erfindung sieht es vor, die dehnbaren bzw. stärker dehnbaren Fallschirmleinen aus mindestens einem gummibandähnlichen Strang, insbesondere einem Gummiband, zu bilden. Demgegenüber werden die nicht oder nur wenig dehnbaren Fallschirmleinen in herkömmlicher Weise aus einer Leine bzw. einem Seil, vorzugsweise einem geflochtenen oder gewebten Seil, mit nahezu keiner Elastizität gebildet. Durch die Bildung der dehnbaren bzw. der stärker dehnbaren Fallschirmleinen aus mindestens einem gummibandartigen Strang bzw. einem Gummiband erhält zumindest diese eine Fallschirmleine eine Dehnbarkeit und Elastizität, die deutlich größer ist als bei den übrigen Fallschirmleinen, die im Rahmen der auftretenden Kräfte entweder überhaupt nicht dehnbar sind oder sich nur in einem vernachlässigbar geringen Umfang dehnen, wobei eine solche Dehnung der üblichen Fallschirmleinen unter 1 % der Ausgangslänge liegt.

Eine vorteilhafte Weiterbildungsmöglichkeit der Vorrichtung sieht es bei einer Fallschirmkappe mit einer Deckfläche mit vorzugsweise rundem, mehreckigen oder elliptischen Querschnitt und einem den Rand der Deckfläche umgebenden Kragen vor, dass ein freier, unterer Rand des Kragens Zipfel aufweist und an einer Spitze jedes Zipfels ein Ende einer Fallschirmleine befestigt ist. Bei einem solchen Fallschirm sind bevorzugt an den Spitzen zweier benachbarter Zipfel die dehnbaren bzw. dehnbareren -Fallschirmleinen befestigt. Diese Art der Ausbildung des Fallschirms hat sich überraschend als besonders wirksam im Zusammenhang mit nicht dehnbaren oder nur wenig dehnbaren Fallschirmleinen einerseits und dehnbaren bzw. dehnbareren Fallschirmleinen andererseits erwiesen. Es wird so das verzögerte Bremsverhalten des Fallschirms, also die Verlängerung der Dauer, bis die vollständige Fallschirmkappenfläche zum Abbremsen zur Verfügung steht, besonders zuverlässig herbeigeführt und dadurch eine unter allen Umständen gegebene Verringerung des Öffnungsstoßes beim Entfalten des Fallschirms herbeigeführt.

Eine andere Ausgestaltungsmöglichkeit der Vorrichtung sieht es vor, die den an der Fallschirmkappe befestigten Enden der Fallschirmleinen gegenüberliegenden Enden an einer Verbindungsstelle miteinander zu verbinden. An der Verbindungsstelle kann entweder das Signal-, Leucht- und/oder Beobachtungsmittel direkt befestigt sein oder auch ein Ende einer weiteren Fallschirmleine, zum Beispiel einer Halteleine, die am gegenüberliegenden Ende das Signal-, Leucht- und/oder Beobachtungsmittel trägt. Dabei kann die mindestens eine weitere Fallschirmleine bzw. Haltleine genauso wie ein Teil der Fallschirmleinen dehnbar, vorzugsweise elastisch dehnbar, sein. Diese Dehnbarkeit kann gegebenenfalls genauso groß sein wie die dehnbaren bzw. dehnbareren Fallschirmleinen. Durch eine solchermaßen ausgebildete weitere Fallschirmleine bzw. Halteleine wird die Stoßdämpfung oder Ruckdämpfung beim Öffnen bzw. Entfalten des Fallschirms noch wirksamer herbeigeführt. Insbesondere kann sich dadurch die Zeit, die der Fallschirm braucht, bis er sich vollständig entfaltet, verlängert werden.

Bevorzugte Ausführungsbeispiele der Erfindung werden nachfolgend anhand der Zeichnung näher erläutert. In dieser zeigen:
- Fig. 1: eine perspektivische Darstellung eines voll entfalteten Fallschirms eines ersten Ausführungsbeispiels,
- Fig. 2: eine Seitenansicht des teilweise entfalteten Fallschirms mit zwei gedehnten Fangleinen,
- Fig. 3: eine Vorderansicht des teilweise entfalteten Fallschirms der Fig. 2 mit zwei gedehnten Fangleinen,
- Fig. 4: eine Seitenansicht des vollständig entfalteten Fallschirms in Richtung IV gemäß der Fig. 6,
- Fig. 5: eine Vorderansicht des entfalteten Fallschirms der Fig. 4,
- Fig. 6: eine Draufsicht auf eine Fallschirmkappe des vollständig entfalteten Fallschirms der Fig. 1, 4 und 5,
- Fig. 7: eine perspektivische Darstellung eines teilweise entfalteten Fallschirms mit einer elastisch gedehnten Fangleine gemäß einem zweiten Ausführungsbeispiel,
- Fig. 8: eine Seitenansicht des in der Fig. 7 dargestellten Fallschirms,
- Fig. 9: eine perspektivische Darstellung eines teilweise entfalteten Fallschirms mit zwei elastisch gedehnten Fangleinen gemäß einem dritten Ausführungsbeispiel der Erfindung,
- Fig. 10: eine Seitenansicht des Fallschirms der Fig. 9,
- Fig. 11: eine perspektivische Darstellung eines teilweise entfalteten Fallschirms mit vier elastisch gedehnten Fangleinen gemäß einem vierten Ausführungsbeispiel der Erfindung,
- Fig. 12: eine Seitenansicht des Fallschirms der Fig. 11,
- Fig. 13: eine perspektivische Darstellung eines teilweise entfalteten Fallschirms mit vier elastisch gedehnten Fangleinen gemäß einem fünften Ausführungsbeispiel der Erfindung, und
- Fig. 14: eine Seitenansicht des Fallschirms der Fig. 13.

Die verschiedenen Ausführungsbeispiele der Erfindung werden nachfolgend am Beispiel einer handgehaltenen Fallschirmsignalrakete bzw. einer verschossenen Fallschirmsignalmunition erläutert.

Die Fallschirmsignalrakete und die Fallschirmsignalmunition aller Ausführungsbeispiele weisen eine Hülse mit einem Treibsatz bzw. Raketenmotor auf, der die Fallschirmsignalrakete oder die Fallschirmsignalmunition in die Luft hochschießt.

Bei allen Ausführungsbeispielen sind in der Hülse über dem Treibsatz bzw. Raketenmotor ein zusammengefalteter Fallschirm mit mindestens einem daran befestigten Signalmittel und gegebenenfalls eine Ausstoßladung sowie ein Überzündmittel angeordnet.

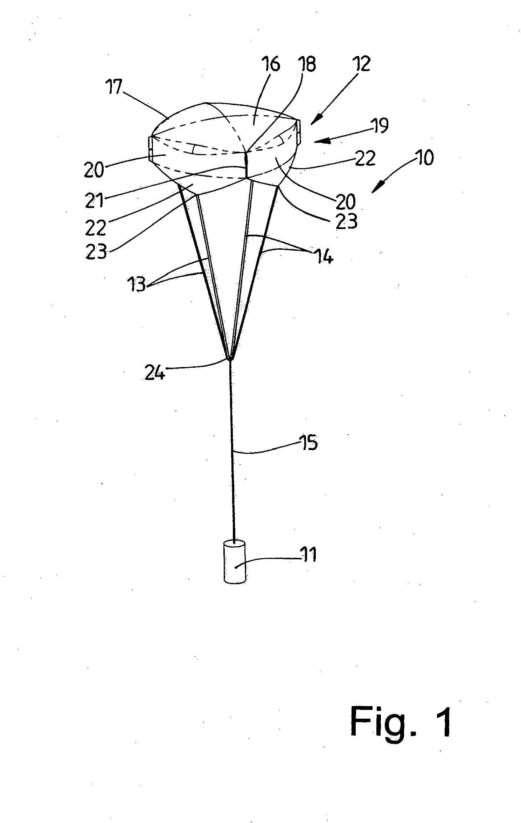

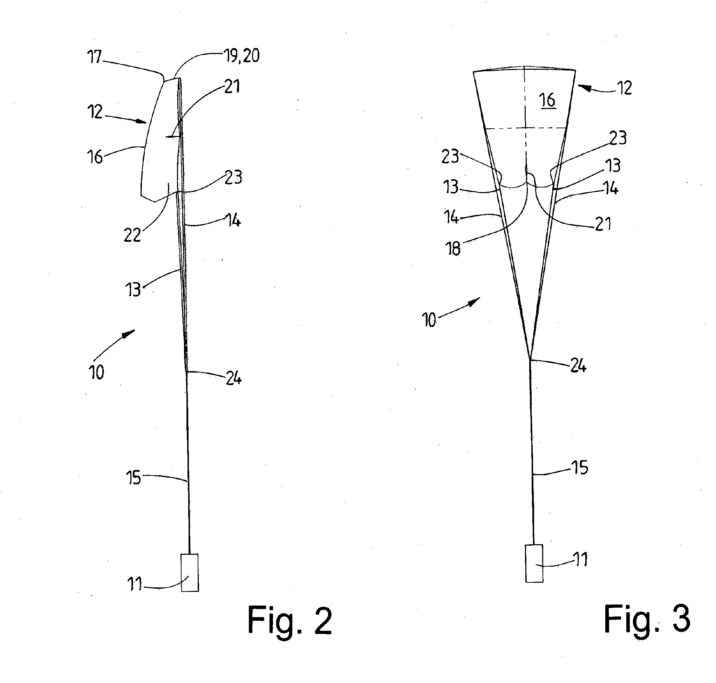

In den Fig. 1 bis 6 sind nur der Fallschirm 10 und das Signalmittel 11 nach dem Hochschießen und Ausstoßen aus der Hülse gezeigt, und zwar sowohl im teilweise entfalteten Zustand (Fig. 2 und 3) als auch im vollständig entfalteten, ganz geöffneten Zustand (Fig. 1 und 4 bis 6).

Der Fallschirm 10 des ersten Ausführungsbeispiels (Fig. 1 bis 6) verfügt über eine Fallschirmkappe 12, vier als Fangleinen 13, 14 ausgebildete Fallschirmleinen und eine weitere als Halteleine 15 ausgebildete Fallschirmleine.

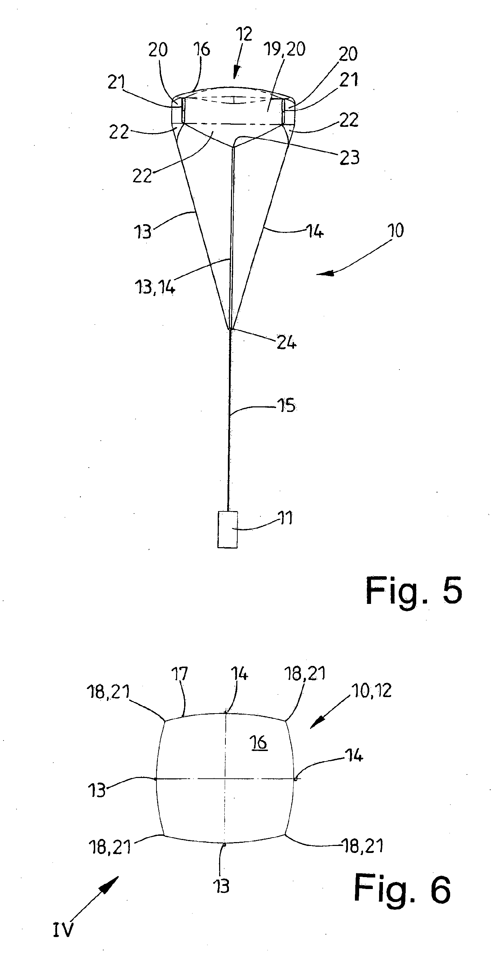

Die Fallschirmkappe 12 weist eine Deckfläche auf, bei der es sich im gezeigten Ausführungsbeispiel um eine viereckige Deckfläche 16 handelt. Die an vier Ecken 18 zusammenhängenden Ränder 17 der Deckfläche 16 sind im vorliegenden Ausführungsbeispiel leicht bogenförmig ausgebildet, nämlich nach außen gewölbt (Fig. 6). Die Deckfläche 16 ist von einem umlaufenden Kragen 19 umgeben, der etwa senkrecht zur Deckfläche 16 verläuft und von den Rändern 17 der Deckfläche 16 ausgeht. Beim vollständig entfalteten bzw. geöffneten Fallschirm 10 (Fig. 1, 4 und 5) weist der Kragen 19 ausgehend von der Deckfläche 16 nach unten zur Bildung der unten offenen Fallschirmkappe 12. Dadurch entsteht ein unten offener Raum in der Fallschirmkappe 12, worin sich Luft sammelt, wenn der Fallschirm 10 mit dem Signalmittel 11 abgebremst zur Erde gleitet. Bei der hier gezeigten viereckigen Deckfläche 16 weist der Kragen 19 vier gleich ausgebildete Kragenabschnitte 20 auf, die an von den Ecken 18 der Deckfläche 16 sich senkrecht nach unten erstreckenden Nahtkanten 21 oder Knickkanten zusammenhängen.

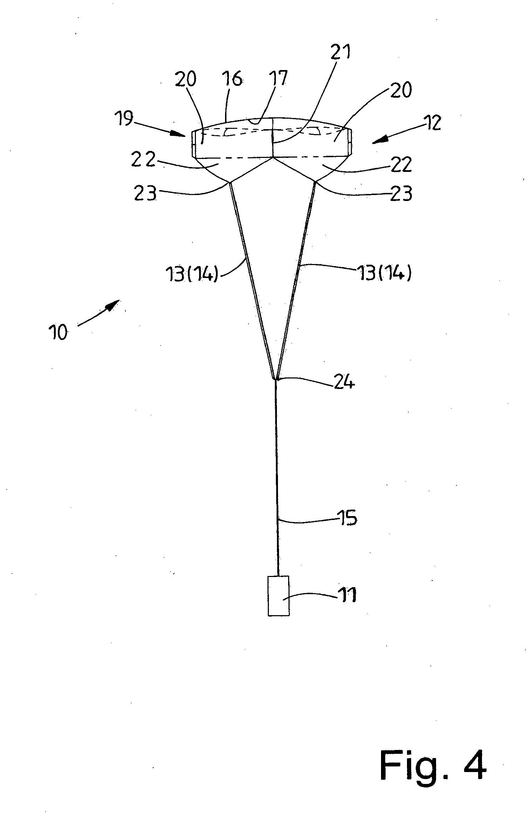

Bei der Fallschirmkappe 12 des in den Fig. 1 bis 6 dargestellten Ausführungsbeispiels des Fallschirms 10 sind die freien, unteren Enden jedes gleichen Kragenabschnitts 20 mit einem dreieckförmigen Zipfel 22 versehen, der an seiner tiefsten Stelle, die mittig zwischen zwei benachbarten Kanten, im gezeigten Ausführungsbeispiel den Nahtkanten 21, liegt, über eine Spitze 23 verfügt. Die Spitzen 23 aller vier Kragenabschnitte 20 liegen in einer gleichen Ebene. Diese Ebene liegt bei vollständig geöffnetem und entfalteten Fallschirm 10 mit parallelem Abstand unter der Ebene, durch die alle vier Ecken 18 der Deckfläche 16 verlaufen (Fig. 4 und 5) und schneidet idealerweise die Sinkrichtung des Fallschirms 10 rechtwinklig. Mit der Spitze 23 jedes der vier Kragenabschnitte 20 ist ein oberes Ende der vier Fangleinen 13, 14 fest verbunden. Die unteren Enden aller vier Fangleinen 13, 14 sind an einer gemeinsamen Verbindungsstelle 24 zusammengeführt und hier gehalten. An der Verbindungsstelle 24 ist ein oberes Ende der Halteleine 15 mit allen vier Fangleinen 13, 14 verbunden. An einem unteren Ende der Halteleine 15 ist das Signalmittel 11 befestigt.

Erfindungsgemäß sind einige Fangleinen 14 elastisch dehnbar bzw. wesentlich dehnbarer als die übrigen Fangleinen. Gezielt dehnbar ausgebildet sind im gezeigten Ausführungsbeispiel nur zwei benachbarte Fangleinen 14, während die beiden übrigen Fangleinen 13 quasi undehnbar sind. Sie sind nur im Rahmen des bei Leinen üblichen Umfangs dehnbar. Wenn im Folgenden von nicht dehnbaren Fangleinen 13 gesprochen wird, sind darunter Fangleinen 13 zu verstehen, die nur minimal, nämlich im unvermeidbaren Umfang dehnbar sind, aber nicht erfindungsgemäß gezielt stark dehnbar sind, wie das bei den beiden benachbarten Fangleinen 14 vorgesehen ist.

Die bewusst dehnbaren Fangleinen 14 sind aus einem oder mehreren gummibandähnlichen Strängen gebildet. Insbesondere bestehen die dehnbaren Fangleinen 14 aus Gummibändern. Die dehnbaren Fangleinen 14 sind dadurch im elastischen Bereich dehnbar, so dass nach dem Dehnen der elastischen Fangleinen 14 die Dehnung selbsttätig wieder rückgängig gemacht wird. Die Dehnbarkeit bzw. Elastizität der dehnbaren Fangleinen 14 kann derart sein, dass sich die dehnbaren Fangleinen 14 bis auf das doppelte ihrer Ausgangslänge im unbelasteten Zustand und/oder die doppelte Länge der nicht dehnbaren Fangleinen 13 im elastischen, also reversiblen, Bereich dehnbar sind. Vorzugsweise ist jede dehnbare Fangleine 14 um mindestens 30% ihrer ungedehnten, also zusammengezogenen Ausgangslänge dehnbar. Im gezeigten Ausführungsbeispiel sind die dehnbaren Fangleinen 14 so weit dehnbar, dass sich ihre Ausgangslänge um das Maß des diagonalen Abstands zweier gegenüberliegender Ecken 18 der Deckfläche 16 der Fallschirmkappe 12, mindestens aber den Abstand gegenüberliegender Nahtkanten 21 eines Kragenabschnitts 20, dehnen kann. Im gezeigten Ausführungsbeispiel können sich die elastischen Fangleinen 14 gummibandähnlich auf das 1,5-fache bis 2,5-fache ihrer Ausgangslänge elastisch verlängern.

Die quasi nicht dehnbaren Fangleinen 13 sind aus üblichem Leinenmaterial hergestellt, das nicht oder so gut wie nicht dehnbar ist. Hierbei kann es sich um gewebte oder geflochtene Leinen oder Seile handeln. Diese Leinen oder Seile können gegebenenfalls ganz oder teilweise aus hochzugfesten Fasern wie Glas- oder Kohlefasern gebildet sein. Daraus hergestellte Fangleinen 13 sind sehr leicht, weil sie infolge ihrer hochzugfesten Fasern nur einen vergleichsweise geringen Durchmesser aufweisen müssen.

Die Längen der nicht dehnbaren Fangleinen 13 und auch der dehnbaren Fangleinen 14 sind so bemessen, dass bei vollständig geöffnetem bzw. entfaltetem Fallschirm 10 und dann vollständig ausgebildeter Fallschirmkappe 12 und nach dem Einstellen einer konstanten Sinkgeschwindigkeit des Fallschirms mit dem daran hängenden Signalmittel 11 sich die dehnbaren Fangleinen 14 stets wieder so weit verkürzt haben, dass alle vier Fangleinen 13, 14, auch die dehnbaren Fangleinen 14, etwa gleich lang sind, so dass die Verbindungsstelle 24 aller vier Fangleinen 13, 14 etwa mittig unter der Mitte der Deckfläche 16 der Fallschirmkappe 12 liegt, wenn der Fallschirm 10 mit dem daran hängenden Signalmittel 11 langsam in Richtung Erde auf den Boden zurückschwebt (Fig. 1, 4 und 5).

Die einzige Haltleine 15 des Signalmittels 11 kann aus einem im Wesentlichen nicht dehnbaren Seil oder einer Leine gebildet sein. Es ist aber auch denkbar, dass die Halteleine 15 wie die Fangleinen 14 elastisch dehnbar ist, wobei die Elastizität der Halteleine 15 größer oder kleiner sein kann als die der Fangleinen 14

Mit den dehnbaren Fangleinen 14 läuft das Öffnen des Fallschirms 10 nach dem Hochschießen und Ausstoßen des Fallschirms 10 mit dem Signalmittel 11 aus der Raketenhülse wie folgt ab:

Infolge des noch nach dem Ausstoßen aus der Raketenhülse unausgefalteten, vorzugsweise zusammengelegten, Fallschirms 10 fällt dieser mit dem Signalmittel 11 zunächst nahezu unabgebremst in Richtung Boden. Dabei beginnt sich die Fallschirmkappe 12 des Fallschirms 10 allmählich zu entfalten. Dadurch werden die Fangleinen 13 und 14 auf Zug belastet. Diese Zugbelastung führt bei den dehnbaren Fangleinen 14 dazu, dass sich diese infolge ihrer Dehnbarkeit elastisch verlängern, wodurch die anfänglich wirksame Fallschirmfläche reduziert wird.

Die Verlängerung der elastischen Fangleinen 14 kann so weit gehen, dass diese gegenüber ihrer unbelasteten Ausgangslänge auf bis zu die 2-fache Länge gedehnt werden. Bevorzugt dehnen sich die dehnbaren Fangleinen 11 infolge der Bremskraft der noch unvollständig ausgefalteten Fallschirmkappe 12 so weit, dass die Deckfläche 16 der Fallschirmkappe 12 etwa in einer Ebene längs oder leicht schräg zur Sinkrichtung des Signalmittels 11 verläuft (Fig. 2 und 3). Dabei ist die Fallschirmkappe 12 zwischen den längeren gedehnten Fangleinen 14 und den kürzeren undehnbaren Fangleinen 13 etwa gestreckt. Hierdurch wird die Gestalt der Fallschirmkappe 12 so verändert, dass ihre wirksame Fläche anfänglich kleiner ist, so dass die Fallschirmkappe 12 quasi wie eine Flagge im Wind flattert. Das führt zu einer anfänglich nur geringen Reduzierung der Sinkgeschwindigkeit des Fallschirms 10 mit dem daran hängenden Signalmittel 10. Danach nimmt die Zugbelastung der Fangleinen 13 und 14 nach und nach ab, wodurch sich allmählich die im elastischen Bereich gedehnten Fangleinen 14 wieder zusammenziehen und verkürzen. Hierdurch wird die Deckfläche 16 der Fallschirmkappe 12 zunehmend verschwenkt und in eine etwa horizontale Ausrichtung gebracht, wodurch es zu einem zeitlich verzögerten Ausfalten der Fallschirmkappe 12 und somit zum langsameren Öffnen bzw. Entfalten des Fallschirms 10 kommt, wodurch sich aufgrund der unten offenen Fallschirmkappe 12 in derselben zunehmend ein Luftpolster bildet, das die Sinkgeschwindigkeit des Fallschirms 10 mit dem Signalmittel 11 weiter reduziert. Dabei findet eine weitere elastische Verkürzung der dehnbaren Fangleinen 14 statt.

Sobald der Fallschirm 10 und das daran hängende Signalmittel 11 eine konstante Sinkgeschwindigkeit erreicht haben, ist die Dehnung der elastischen Fangleinen 14 größtenteils aufgehoben, und zwar so weit, dass alle Fangleinen, und zwar die undehnbaren Fangleinen 13 und die dehnbaren Fangleinen 14, etwa eine gleiche Länge haben und die Verbindungsstelle 24 der Enden aller Fangleinen 13 und 14 sowie das Signalmittel 11 idealerweise mittig unter der Fallschirmkappe 12 hängen, also eine Verlängerung der Haltleine 15 in Richtung zur Fallschirmkappe 12 etwa mittig durch die Deckfläche 16 der Fallschirmkappe 12 verläuft. Zu diesem Zweck ist es bevorzugt vorgesehen, die Elastizität bzw. das Dehnverhalten der elastisch dehnbaren Fangleinen 14 an das Gewicht des Fallschirms 10 und vor allem des daran hängenden Signalmittels 11 anzupassen. Zumindest bei dieser idealen Orientierung des vollständig geöffneten und gefalteten Fallschirms 10 mit dem daran hängenden Signalmittel 11 sind alle vier Fangleinen 13 und 14, auch die stärker dehnbaren, elastischen Fangleinen 14, etwa gleich lang.

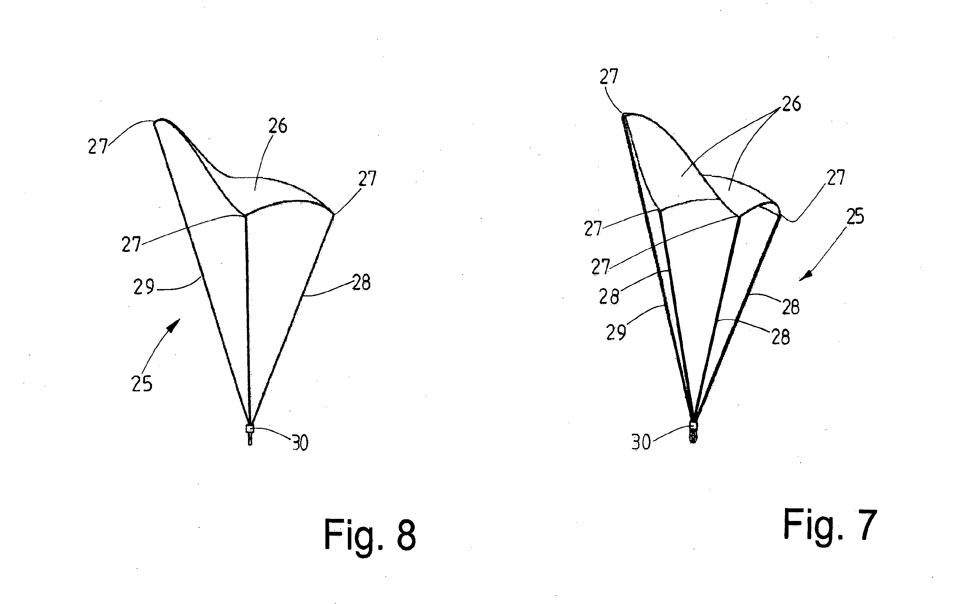

Die Ausführungsbeispiele der Fig. 7 bis 14 betreffen Fallschirme mit jeweils einer Fallschirmkappe aus einem planen, ebenen Zuschnitt. Dieser Zuschnitt ist bevorzugt aus einem geeigneten biegeschlaffen Material, beispielsweise einer dünnen Folie oder einem dünnen Gewebe, gebildet. In den Ausführungsbeispielen der Fig. 7 bis 14 ist die Fallschirmkappe aus einem einfachen rechteckigen, vorzugsweise quadratischen, Zuschnitt mit vier Ecken gebildet. Der Zuschnitt kann einstückig, also ungenäht, aber auch aus mehreren Stücken zusammengenäht sein.

Die Fallschirme der Ausführungsbeispiele gemäß den Fig. 7 bis 14 unterscheiden sich im Wesentlichen nur durch die Anzahl und Anordnung der als Fangleinen ausgebildeten Fallschirmleinen. Insbesondere unterscheiden sich die Ausführungsbeispiele in der Anzahl und Anordnung der dehnbaren Fangleinen und quasi undehnbaren Fangleinen. Hinsichtlich der Eigenschaften sind die dehnbaren Fangleinen mit den Fangleinen 14 des zuvor beschriebenen Ausführungsbeispiels vergleichbar, insbesondere gleichzusetzen. Genauso entsprechen die undehnbaren Fangleinen den Fangleinen 13 des vorhergehenden Ausführungsbeispiels.

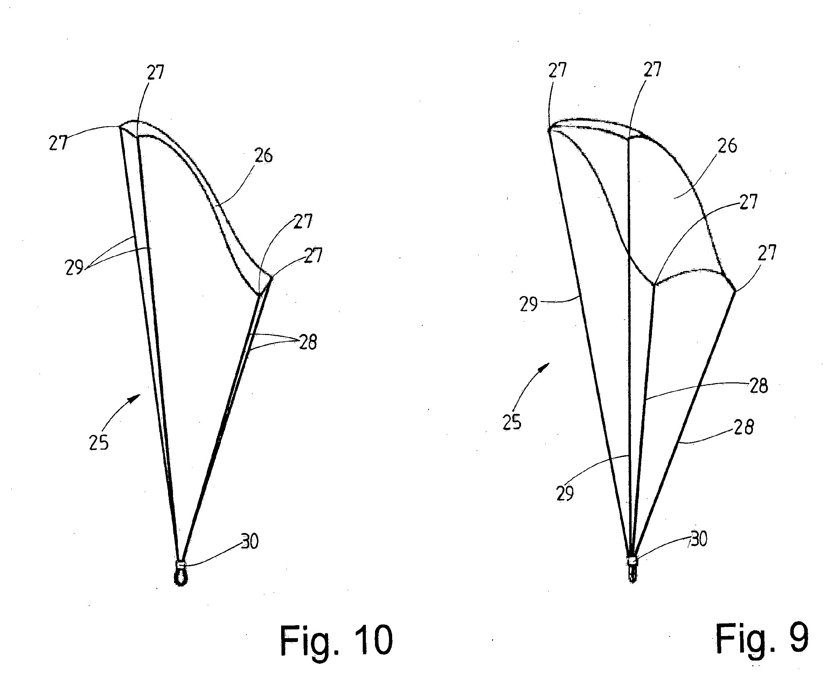

Im Ausführungsbeispiel der Fig. 7 und 8 sind drei Ecken des viereckigen Zuschnitts der Fallschirmkappe 26 nicht dehnbare Fangleinen 28 zugeordnet. Nur einer vierten Ecke 27 der Fallschirmkappe 26 ist eine dehnbare Fangleine 29 zugeordnet. Somit verfügt der Fallschirm 25 über insgesamt vier Fangleinen 28, 29, die am unteren Ende zu einer Verbindungsstelle 30 zusammengeführt und dort verbunden sind. Diese Verbindungsstelle 30 entspricht der Verbindungsstelle 24 des Fallschirms 10. An der Verbindungsstelle 30 kann entweder direkt das in den Fig. 7 und 8 und auch den nachfolgenden Fig. 9 bis 14 nicht gezeigte Signalmittel 11 angeordnet sein. Es ist aber auch denkbar, an der Verbindungsstelle 30 eine weitere Fallschirmleine, insbesondere eine in den Fig. 7 bis 14 ebenfalls nicht gezeigte Halteleine nach Art der Haltleine 15 der Fig. 1 bis 6 zu befestigen, deren unteres Ende das Signalmittel trägt.

Infolge der nur einen dehnbaren Fangleine 29 beim Fallschirm 25 der Fig. 7 und 8 wird während des Entfaltens der Fallschirmkappe 26 zunächst nur eine Ecke 27 der Fallschirmkappe 26 hochgeklappt, während die übrigen drei Ecken 27 durch die nicht dehnbaren Fangleinen 28 auf etwa gleicher Höhe verbleiben. Auf diese Weise nimmt nur ein Teil der Fallschirmkappe 26 des Fallschirms 25 beim anfänglichen Entfalten und während der Dehnung der einen dehnbaren Fangleine 29 eine Stellung ein, die anfänglich eine Verzögerung des Fallschirms 25 reduziert. Wenn mit abnehmender Verringerung der Sinkgeschwindigkeit des Fallschirms 25 mit dem Signalmittel sich die einzige dehnbare Fangleine 29 wieder etwas zusammenzieht, nimmt die Fallschirmkappe 26 ihre vorgesehene, symmetrische Position ein, in der der Fallschirm 25 vollständig entfaltet ist und alle vier Ecken 27 der Fallschirmkappe 26 durch nahezu vollständige Rückgängigmachung der anfänglichen Dehnung der dehnbaren Fangleine 29 etwa auf dem gleichen Level sich befinden und dadurch der Fallschirm 25 die Sinkgeschwindigkeit des Signalmittels 11 im maximal möglichen Umfang verringert und dadurch das Signalmittel maximal abbremst.

Der Fallschirm 25 des Ausführungsbeispiels der Fig. 9 und 10 unterscheidet sich von demjenigen der Fig. 7 und 8 nur dadurch, dass von den insgesamt vier Fangleinen 28, 29 zwei benachbarte Fangleinen 29 dehnbar sind. Im Übrigen entspricht der Fallschirm 25 demjenigen der Fig. 7 und 8. Deswegen werden für das Ausführungsbeispiel der Fig. 9 und 10 für gleiche Teile die gleichen Bezugsziffern wie beim Ausführungsbeispiel der Fig. 7 und 8 verwendet.

Weil beim Fallschirm 25 der Fig. 9 und 10 zwei benachbarte Fangleinen 29 dehnbar ausgebildet sind, wird beim anfänglichen Abbremsen des Signalmittels 10 die gesamte Fallschirmkappe 26 schräg zur vertikalen Sinkrichtung gestellt. Dadurch entfaltet die Fallschirmkappe 26 anfänglich noch nicht die volle Bremswirkung, so dass die Sinkgeschwindigkeit des Signalmittels allmählich verringert wird und die Dehnung der beiden elastisch dehnbaren Fangleinen 29 nach und nach rückgängig gemacht wird, bis alle Fangleinen 28 und 29 etwa gleich lang sind und die Fallschirmkappe 26 voll entfaltet ist, indem sie quer zur Sinkrichtung des Signalmittels ausgerichtet ist und dabei die Sinkgeschwindigkeit des Signalmittels im maximal möglichen Umfang reduziert.

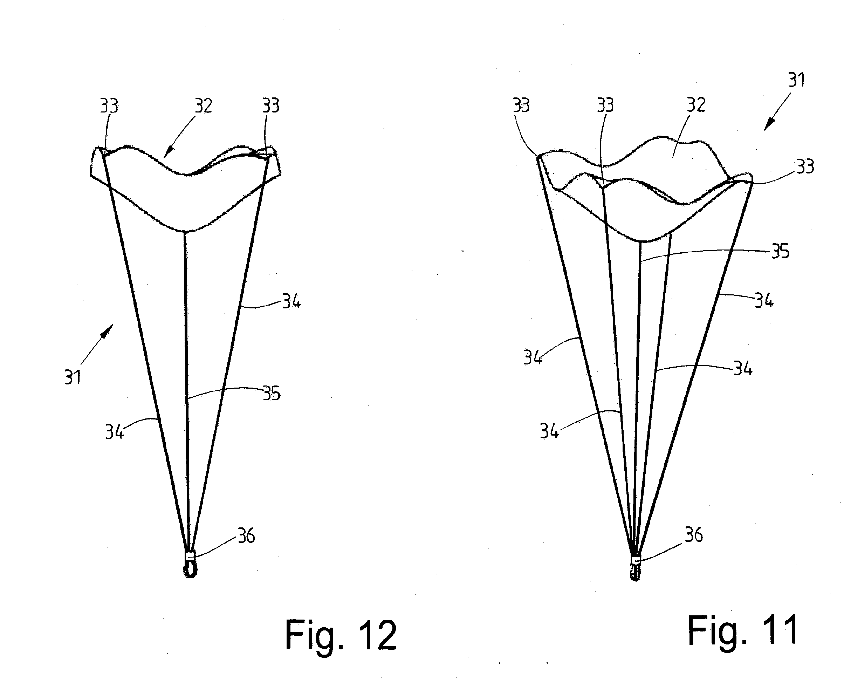

Der Fallschirm 31 der Fig. 11 und 12 weist eine Fallschirmkappe 32 auf, die der Fallschirmkappe 26 des Fallschirms 25 entspricht. Folglich ist auch die Fallschirmkappe 32 aus einem viereckigen, vorzugsweise quadratischen, Zuschnitt mit vier Ecken 33 gebildet.

Der Fallschifrm 31 verfügt über fünf Fallschirmleinen, die als vier dehnbare Fangleinen 34 und eine nicht dehnbare Fangleine 35 ausgebildet sind. Die vier dehnbaren Fangleinen 34 sind gleich lang. Im Übrigen ist die nicht dehnbare Fangleine 35 genauso lang wie die vier dehnbaren Fangleinen 35 im ungedehnten Zustand. Die vier dehnbaren Fangleinen 34 sind an den vier Ecken 33 der viereckigen, insbesondere quadratischen, Fallschirmkappe 32 befestigt. Hingegen ist die nicht dehnbare Fangleine 35 mit einem oberen Ende im Mittelpunkt der viereckigen Fallschirmkappe 32 befestigt. Das untere Ende der nicht dehnbaren Fangleine 35 ist mit der Verbindungsstelle 30 verbunden, genauso wie die vier dehnbaren Fangleinen 34, die zu den Ecken 33 der Fallschirmkappe 32 führen. Es ist im gezeigten Ausführungsbeispiel aber denkbar, dass die mittige, nicht dehnbare Fangleine 35 etwas länger ist als die dehnbaren Fangleinen 34 in ihrem ungedehnten Zustand. Durch die längere mittige Fangleine 35 erhält die Fallschirmkappe 32 bei voll entfaltetem Fallschirm 31, also bei ungedehnten äußeren Fangleinen 34, an der Unterseite, das heißt quasi der Luv-Seite beim sinkenden Fallschirm 31, eine konkave Gestalt.

Beim anfänglichen Abbremsen werden die vier äußeren Fangleinen 34 elastisch gedehnt, wodurch die Ecken 33 der Fallschirmkappe 32 hochklappen, während die Fallschirmkappe 32 in der Mitte von der nicht dehnbaren Fangleine 35 heruntergehalten wird. Dadurch erhält die Fallschirmkappe 32 anfänglich, wenn die Fangleinen 34 noch gedehnt sind, eine bezogen auf die Luv-Seite des sinkenden Fallschirms 31 konvexe Gestalt, bei der die Unterseite der Fallschirmkappe 32 nach unten gewölbt ist. Dadurch wird die Sinkgeschwindigkeit des am Fallschirm 31 hängenden Signalmittels zunächst nur relativ wenig verringert. Bei der anschließenden allmählichen Rückgängigmachung der elastischen Dehnung der dehnbaern Fangleinen 34 werden die Ecken 33 der Fallschirmkappe 32 nach unten gezogen und dadurch die Fallschirmkappe 32 praktisch wieder umgestülpt, wodurch die Fallschirmkappe 32 an ihrer Unterseite wieder eine konkave Gestalt annimmt und dadurch das Bremspotential des Fallschirms 31 erhöht wird. Der dadurch vollständig entfaltete Fallschirm 31 bremst dann das Signalmittel im maximal möglichen Umfange ab, wodurch der Fallschirm 31 die Sinkgeschwindigkeit des Signalmittels 11 gegenüber der Darstellung in den Fig. 11 und 12 bei gedehnten Fangleinen 34 verringert.

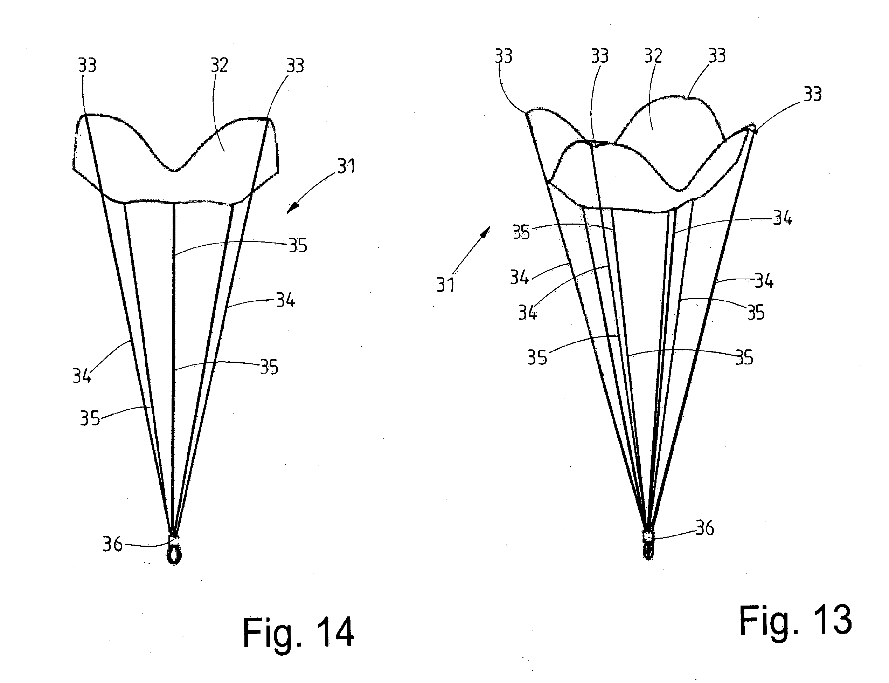

Die Fig. 13 und 14 zeigen ein weiteres Ausführungsbeispiel eines Fallschirms 37, der im Wesentlichen dem Fallschirm 31 der Fig. 11 und 12 entspricht. Auch der Fallschirm 31 verfügt über eine viereckige Fallschirmkappe 32 aus einem vorzugsweise ebenen Zuschnitt, wobei an den vier Ecken 33 der Fallschirmkappe 32 dehnbare Fangleinen 34 befestigt sind.

Abweichend vom zuvor beschriebenen Fallschirm 31 (Fig. 11 und 12) sind beim Fallschirm der Fig. 13 und 14 vier nicht dehnbare Fangleinen 35 vorgesehen. Diese vier nicht dehnbaren Fangleinen 35 sind allesamt von den vier Ecken 33 der Fallschirmkappe 32 zur Mitte derselben hin beabstandet. Die Befestigungspunkte der nicht dehnbaren, inneren Fangleinen 35 an der Fallschirmkappe 32 können auf gedachten Verbindungslinien zwischen jeweils zwei diagonal gegenüberliegenden Ecken 33 der Fallschirmkappe 32, aber auch auf Mittellinien des viereckigen Zuschnitts der Fallschirmkappe liegen. Durch diese Anordnung wird beim anfänglichen Ausfalten des Fallschirms 31 ein mittlerer, viereckiger Teil der Fallschirmkappe 32 von den gleichlangen nicht dehnbaren inneren Fangleinen 35 in einer etwa planen Ausrichtung quer zur senkrechten Sinkrichtung gehalten. Die vier gleich langen äußeren dehnbaren Fangleinen 34 werden beim anfänglichen Entfalten des Fallschirms 31 elastisch gedehnt, so dass ein äußerer Ringbereich der Fallschirmkappe 32 zwischen den Befestigungsstellen der undehnbaren Fangleinen 35 an der Fallschirmkappe 32 und den äußeren Ecken 33 derselben hochgeklappt bzw. nach oben umgestülpt wird, wodurch die Unterseite der Fallschirmkappe 32 beim anfänglichen Entfalten eine konvexe Gestalt erhält.

Durch den in den Fig. 13 und 14 gezeigten teilweise entfalteten bzw. wirksamen Fallschirm 31 wird die Sinkgeschwindigkeit des an der Verbindungsstelle 36 direkt oder über einer Halteleine befestigten Signalmittels sukzessive reduziert, indem sich nach und nach die Dehnung der elastisch dehnbaren Fangleinen 34 wieder zurückbildet. Nachdem die Dehnung der elastischen Fangleinen 34 aufgehoben ist, sind die Fangleinen 34 entweder genauso lang wie die nicht dehnbaren Fangleinen 35 oder etwas kürzer, wodurch die Fallschirmkappe 32 bei einem vollständig wirksamen und ganz entfaleteten Fallschirm 31 eine flache bzw. konkave Gestalt an der luvwärtigen Unterseite der Fallschirmkappe 32 erhält. Die Fallschirmkappe 32 ist dann praktisch umgekehrt ausgeformt wie in der den teilweise wirksamen Fallschirm 31 zeigenden Darstellung der Fig. 13 und 14. Bei dieser an der Unterseite konkaven und nach unten gestülpten Ausbildung der Fallschirmkappe 32 erzeugt der Fallschirm 31 seine maximale Bremswirkung, die das am Fallschirm 31 hängende Signalmittel mit geringstmöglicher Sinkgeschwindigkeit zu Boden sinken lässt.

In vorstehend beschriebener Weise sind auch Fallschirme für Fallschirmleuchtraketen, Fallschirmraketen mit Beobachtungsmittel, wie zum Beispiel Kameras, Sonden oder Sensoren und auch auf einer ballistischen Bahn verschossene Fallschirmsignalgeschosse, Fallschirmleuchtgeschosse sowie Fallschirmgeschosse für Beobachtungsmittel ausgebildet, indem auch solche Fallschirme mindestens eine elastisch dehnbaren Fangleine und mindestens eine nicht dehnbare oder nicht nennenswert dehnbare Fangleine aufweisen. Der Öffnungsstoß des Fallschirms wird dabei genauso reduziert, wie das vorstehend im Zusammenhang mit Fallschirmsignalraketen und -signalmunition beschrieben worden ist.

### Bezugszeichenliste:

| | | | |
|---|---|---|---|
| 10 | Fallschirm | 36 | Verbindungsstelle |
| 11 | Signalmittel | | |
| 12 | Fallschirmkappe | | |
| 13 | Fangleine | | |
| 14 | Fangleine (dehnbar) | | |
| 15 | Halteleine | | |
| 16 | Deckfläche | | |
| 17 | Rand | | |
| 18 | Ecke | | |
| 19 | Kragen | | |
| 20 | Kragenabschnitt | | |
| 21 | Nahtkante | | |
| 22 | Zipfel | | |
| 23 | Spitze | | |
| 24 | Verbindungsstelle | | |
| 25 | Fallschirm | | |
| 26 | Fallschirmkappe | | |
| 27 | Ecke | | |
| 28 | Fangleine | | |
| 29 | Fangleine (dehnbar) | | |
| 30 | Verbindungsstelle | | |
| 31 | Fallschirm | | |
| 32 | Fallschirmkappe | | |
| 33 | Ecke | | |
| 34 | Fangleine (dehnbar) | | |
| 35 | Fangleine | | |

## Patentansprüche

1. Pyrotechnische Vorrichtung mit einer Rakete oder einem Geschoß, einem Fallschirm (10; 25; 31) mit Fallschirmleinen und mindestens einem dem Fallschirm (10; 25; 31) zugeordneten Signal-, Leucht- und/oder Beobachtungsmittel, **dadurch gekennzeichnet, dass** mindestens eine Fallschirmleine dehnbarer ist als wenigstens eine übrige Fallschirmleine.

2. Pyrotechnische Vorrichtung nach Anspruch 1, **dadurch gekennzeichnet, dass** die Dehnbarkeit jeder dehnbaren oder dehnbareren Fallschirmleine mindestens doppelt so groß ist wie die Dehnbarkeit der mindestens einen, vorzugsweise aller, übrigen Fallschirmleinen und/oder jede dehnbare oder dehnbarere Fallschirmleine um mindestens 30% ihrer Ausgangslänge dehnbar ist.

3. Pyrotechnische Vorrichtung nach Anspruch 1 oder 2, **dadurch gekennzeichnet, dass** die mindestens eine übrige Fallschirmleine beim Entfalten des Fallschirms (10; 25; 31) nicht oder zumindest kaum dehnbar ist.

4. Pyrotechnische Vorrichtung nach einem der vorhergehenden Ansprüche, **dadurch gekennzeichnet, dass** die oder jede dehnbare bzw. dehnbarere Fallschirmleine mindestens so weit dehnbar ist, dass ihre Länge um den Durchmesser, die größte Breite oder Diagonale der Grundrissfläche des Fallschirms (10; 25; 31), insbesondere einer Deckfläche (16) oder eines Zuschnitts einer Fallschirmkappe (12; 26; 32), vergrößerbar ist.

5. Pyrotechnische Vorrichtung nach einem der vorhergehenden Ansprüche, **dadurch gekennzeichnet, dass** eine oder mindestens zwei benachbarten Fallschirmleinen eine größere Dehnbarkeit aufweisen als die übrigen Fallschirmleinen.

6. Pyrotechnische Vorrichtung nach einem der vorhergehenden Ansprüche, **dadurch gekennzeichnet, dass** die Dehnung aller Fallschirmleinen, insbesondere die Dehnung der dehnbaren oder stärker dehnbaren Fallschirmleinen, im elastischen Bereich liegt.

7. Pyrotechnische Vorrichtung nach einem der vorhergehenden Ansprüche, **dadurch gekennzeichnet, dass** die Elastizität jeder dehnbaren oder dehnbareren Fallschirmleine gleich ist, vorzugsweise die Elastizität der oder jeder dehnbaren oder dehnbareren Fallschirmleine derart ist, dass bei vollständig geöffnetem Fallschirm (10; 25; 31) bzw. Fallschirmkappe (12; 26; 32) alle Fallschirmleinen mindestens gleich lang sind.

8. Pyrotechnische Vorrichtung nach einem der vorhergehenden Ansprüche, **dadurch gekennzeichnet, dass** die mindestens eine dehnbare oder stärker dehnbare Fallschirmleine aus mindestens einem gummiartigen Strang, insbesondere einem Gummiband, gebildet ist und die mindestens eine nicht oder weniger dehnbare Fallschirmleine aus einem Seil, vorzugsweise einem geflochtenen oder gewebten Seil, gebildet ist.

9. Pyrotechnische Vorrichtung nach einem der vorhergehenden Ansprüche, **dadurch gekennzeichnet, dass** die Deckfläche (16) oder der Zuschnitt der Fallschirmkappe (12; 26; 32) eine vorzugsweise runde oder mehreckige Grundfläche aufweist, vorzugsweise ein Rand (17) der Deckfläche (16) von einem Kragen (19) umgeben ist, wobei ein freier unterer Rand des Kragens (19) Zipfel (22) aufweist und an einer Spitze (23) jedes Zipfels (22) ein Ende einer Fallschirmleine befestigt ist, vorzugsweise an den Spitzen (23) zweier benachbarter Zipfel (22) die dehnbaren bzw. stärker dehnbaren Fallschirmleinen befestigt sind.

10. Pyrotechnische Vorrichtung nach einem der Ansprüche 1 bis 9, **dadurch gekennzeichnet, dass** die Fallschirmleinen Fangleinen (13, 14; 28, 29; 34, 35) sind.

11. Pyrotechnische Vorrichtung nach Anspruch 9 oder 10, **dadurch gekennzeichnet, dass** die den an den Spitzen (23) der Zipfel (22) des Kragens (19) der Fallschirmkappe (12) befestigten Enden aller Fangleinen (13, 14) gegenüberliegenden, unteren Enden der Fangleinen (13, 14) an einer Verbindungsstelle (24) zusammengeführt sind, und an der Verbindungsstelle (24) das Signal-, Leucht- und/oder Beobachtungsmittel oder ein oberes Ende einer das Signal-, Leucht- und/oder Beobachtungsmittel tragenden weiteren Fallschirmleine, vorzugsweise eine Haltleine (15), befestigt ist, wobei insbesondere die zusätzliche Fallschirmleine bzw. die Halteleine (15) dehnbar ist, insbesondere elastisch dehnbar ist.
